# DEMANDE DE BREVET EUROPEEN

(11) **EP 4 203 419 A1**
(43) Date de publication de la demande: **28.06.2023**
(21) Numéro de dépôt: 22214700.1
(22) Date de dépôt: 19.12.2022
(51) Int. Cl.: H04L 43/08, H04L 41/14

(54) **MISE EN COMMUNICATION AUTOMATIQUE DE SONDES RESEAU**

(30) Priorité: 22.12.2021 FR 2114243
(71) Demandeur: Airbus Defence and Space SAS, 31402 Toulouse Cedex 4 (FR)
(72) Inventeur: VEYLAND, René, 78990 ELANCOURT (FR)
(74) Mandataire: Cabinet Le Guen Maillet

(57) **Abrégé**

Une première sonde réseau (130) est associée à un premier point de terminaison (120) d'un premier routeur (110). La première sonde réseau (130) détecte, par filtrage de paquets issus ou à destination du premier routeur (110), un tunnel de communication entre le premier point de terminaison (120) et un deuxième point de terminaison (120) d'un deuxième routeur (110). La première sonde réseau (130) déduit une adresse d'une deuxième sonde réseau (130) associée au deuxième point de terminaison (120), en appliquant une fonction de translation bijective par rapport à une adresse du deuxième point de terminaison (120) récupérée des paquets filtrés. Des communications inter-sondes sont mises en place entre les première et deuxième sondes réseau (130), en utilisant l'adresse de la deuxième sonde réseau (130) qui a été déduite, et une surveillance de trafic de données dans le tunnel de communication est effectuée de manière conjointe par les première et deuxième sondes réseau (130).

## Description

### DOMAINE TECHNIQUE

La présente invention concerne le domaine des sondes réseau permettant de surveiller (« monitor » en anglais) du trafic passant par un tunnel de communication, et gérer ainsi des états de congestion de réseaux de communication, par exemple de type WAN (« Wide Area Network » en anglais), et plus particulièrement la mise en communication automatique de telles sondes réseau.

### ETAT DE LA TECHNIQUE ANTERIEURE

Les réseaux de communication servent à offrir une grande diversité de services, comme l'échange de communication voix, typiquement des services dits de VoIP (« Voice over IP » en anglais), l'échange de communication audiovisuelle, la diffusion de programmes multimédia, ou encore l'accès à des données, typiquement l'accès à des services Web. Ces services ont des besoins différents en termes de latence de transmission dans les réseaux de communication, et ont des priorités différentes.

Les liens de communication sur lesquels reposent les réseaux de communication sont basés sur des technologies de transmission physique qui peuvent être très diverses. Chacune de ces technologies conduit à des propriétés différentes de canal de transmission utilisé en termes de capacités, c'est-à-dire en bande passante disponible, taux d'erreur, ou variabilité de cette bande passante disponible.

De manière à gérer de manière adéquate l'admission de services en tenant compte de ces propriétés différentes de canal de transmission, des sondes réseau sont utilisées pour analyser le trafic transitant dans ces réseaux de communication, et notamment dans des tunnels de communication établis entre des routeurs de ces réseaux de communication.

Une difficulté réside dans la configuration de ces sondes réseau pour permettre leur mise en place de manière automatique, malgré un caractère dynamique des établissements de ces tunnels de communication. Il est alors souhaitable de pallier au moins cet inconvénient de l'état de la technique antérieure, et ce, de manière simple, efficace et peu coûteuse.

### EXPOSE DE L'INVENTION

Il est proposé un procédé implémenté par une sonde réseau dans un système de communication comportant une pluralité de routeurs, la sonde réseau étant associée à un premier routeur de ladite pluralité de routeurs et à un premier point de terminaison du premier routeur, le procédé étant effectué par la sonde réseau, appelée ici première sonde réseau. Le procédé comporte les étapes suivantes : détecter, par filtrage de paquets issus ou à destination du premier routeur, un tunnel de communication entre le premier point de terminaison et un deuxième point de terminaison d'un deuxième routeur de ladite pluralité de routeurs ; récupérer, dans au moins un paquet filtré, une adresse du deuxième point de terminaison ; déduire une adresse d'une deuxième sonde réseau associée au deuxième point de terminaison et au deuxième routeur, en appliquant une fonction de translation bijective par rapport à l'adresse du deuxième point de terminaison qui a été récupérée ; mise en place de communications inter-sondes entre la première sonde réseau et la deuxième sonde réseau, en utilisant l'adresse de la deuxième sonde réseau qui a été déduite ; et effectuer une surveillance de trafic de données dans le tunnel de communication, de manière conjointe par la première sonde réseau et la deuxième sonde réseau, par mesures de trafic de données émis et reçu au niveau respectivement du premier point de terminaison et du deuxième point de terminaison.

Ainsi, grâce à la prédéfinition de l'adresse de la deuxième sonde réseau par rapport à l'adresse du deuxième point de terminaison qui a été récupérée des paquets filtrés (et de manière identique, à la prédéfinition de l'adresse de la première sonde réseau par rapport à l'adresse du premier point de terminaison), les communications inter-sondes peuvent être mises en place de manière automatique.

Dans un mode de réalisation particulier, la fonction de translation bijective consiste à appliquer un décalage prédéfini par rapport à l'adresse du deuxième point de terminaison qui a été récupérée

Dans un mode de réalisation particulier, l'adresse de la deuxième sonde réseau est déduite de l'adresse du deuxième point de terminaison qui a été récupérée, en ajoutant un à l'adresse du deuxième point de terminaison qui a été récupérée.

Dans un mode de réalisation particulier, la surveillance de trafic de données dans le tunnel de communication, de manière conjointe par la première sonde réseau et la deuxième sonde réseau, est effectuée par type de services.

Dans un mode de réalisation particulier, le filtrage de paquets issus ou à destination du premier routeur récupère des paquets de données de type GRE (« Generic Routing Encapsulation » en anglais) ou IPSec (« Internet Protocol Security » en anglais).

Dans un mode de réalisation particulier, la première sonde réseau reçoit de la deuxième sonde réseau des informations représentatives de données reçues pour ledit trafic, les compare avec des informations représentatives de données transmises par la première sonde réseau pour ledit trafic, détermine si une différence entre données reçues et transmises est supérieure à un seuil prédéfini et auquel cas détermine l'existence d'une situation de congestion.

Dans un mode de réalisation particulier, des informations représentatives de la surveillance de trafic sont transmises à un orchestrateur du système de communication afin d'adapter des admissions de services.

Il est aussi proposé un produit programme d'ordinateur comportant des instructions pour implémenter le procédé ci-dessus selon l'une quelconque de ces modes de réalisation, lorsque lesdites instructions sont exécutées par un processeur. Il est aussi proposé un support de stockage d'informations stockant un tel programme d'ordinateur comportant des instructions pour implémenter ledit procédé lorsque lesdites instructions sont lues depuis le support de stockage d'informations et exécutées par un processeur.

Il est aussi proposé un dispositif configuré pour implémenter une sonde réseau, appelée ici première sonde réseau, d'un système de communication comportant une pluralité de routeurs, la sonde réseau étant associée à un premier routeur de ladite pluralité de routeurs et à un premier point de terminaison du premier routeur, le dispositif comportant de la circuiterie électronique configurée pour : détecter, par filtrage de paquets issus ou à destination du premier routeur, un tunnel de communication entre le premier point de terminaison et un deuxième point de terminaison d'un deuxième routeur de ladite pluralité de routeurs ; récupérer, dans au moins un paquet filtré, une adresse du deuxième point de terminaison ; déduire une adresse d'une deuxième sonde réseau associée au deuxième point de terminaison et au deuxième routeur, en appliquant une fonction de translation bijective par rapport à l'adresse du deuxième point de terminaison qui a été récupérée ; mise en place de communications inter-sondes entre la première sonde réseau et la deuxième sonde réseau, en utilisant l'adresse de la deuxième sonde réseau qui a été déduite ; et effectuer une surveillance de trafic de données dans le tunnel de communication, de manière conjointe par la première sonde réseau et la deuxième sonde réseau, par mesures de trafic de données émis et reçu au niveau respectivement du premier point de terminaison et du deuxième point de terminaison.

Il est aussi proposé un système de communication comportant une pluralité de routeurs et comportant au moins un tunnel de communication entre des points de terminaison desdits routeurs, dans lequel une pluralité de dispositifs agencés comme évoqué ci-dessus est configurée pour implémenter des sondes réseau, afin d'effectuer une surveillance de trafic de données dans le ou les tunnels de communication de manière conjointe par lesdites sondes réseau.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un système de communication dans lequel l'invention peut être implémentée ;
[Fig. 1B] illustre schématiquement une architecture de communication, applicable au système de communication de la Fig. 1A, dans laquelle des sondes réseau sont configurées pour remonter à un orchestrateur des informations de trafic de données ;
[Fig. 2] illustre schématiquement une architecture modulaire de sondes réseau du système de communication ;
[Fig. 3] illustre schématiquement un exemple d'architecture matérielle permettant l'implémentation des sondes réseau du système de communication ;
[Fig. 4] illustre schématiquement un organigramme de mise en communication automatique des sondes réseau, et de mise en place d'une surveillance de trafic dans au moins un tunnel du système de communication ;
[Fig. 5] illustre schématiquement un organigramme de mise en communication automatique des sondes réseau, dans un mode de réalisation particulier ; et
[Fig. 6] illustre schématiquement une machine d'états d'un protocole de communication inter-sondes.

### EXPOSE DETAILLE DE MODES DE REALISATION

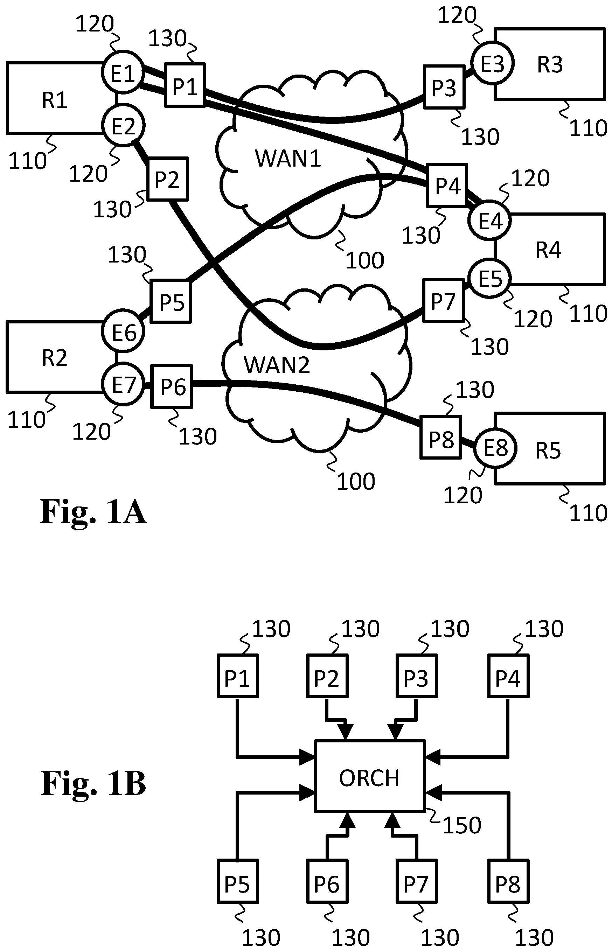

La Fig. 1A illustre schématiquement un système de communication dans lequel l'invention peut être implémentée.

Le système de communication comporte une pluralité de routeurs 110. Cinq routeurs R1 à R5 sont représentés, à titre illustratif, sur la Fig. 1A. Les routeurs 110 sont interconnectés par au moins un réseau de communication 100 sur lequel lesdits routeurs 110 établissent des tunnels de communication. Ainsi, les routeurs 110 comportent au moins un point de terminaison (« end-point » en anglais) 120 de tunnel de communication. Chaque point de terminaison 120 peut concerner un ou plusieurs tunnels de communication.

Chaque réseau de communication 100 peut être de nature variée, qu'elle soit filaire comme par exemple des liens Ethernet, ou de la fibre optique, ou radio comme par exemple un réseau WLAN (« Wireless Local Area Network » en anglais) tels qu'un réseau de la famille de standard IEEE 802.11, ou comme par exemple des liens satellites. Deux réseaux de communications 100 WAN1 et WAN2, de type réseaux étendus WAN (« Wide Area Network » en anglais), sont représentés, à titre illustratif, sur la Fig. 1A.

Les tunnels de communication sont par exemple implémentés grâce au protocole GRE (« Generic Routing Encapsulation » en anglais) ou à la famille de standards IPsec (« Internet Protocol Security » en anglais). D'autres protocoles de mise en tunnel peuvent être utilisés en variante.

Préférentiellement, les tunnels de communications sont sécurisés par chiffrement, de sorte que les données encapsulées dans le protocole d'encapsulation du tunnel de communication ne soient pas déchiffrables par un dispositif qui serait situé entre les deux points de terminaison 120 du tunnel de communication.

De manière illustrative sur la Fig. 1A, un premier tunnel de communication est établi sur le réseau WAN1 entre un point de terminaison E1 du routeur R1 et un point de terminaison E3 du routeur R3, et un deuxième tunnel de communication est établi sur le réseau WAN1 entre le point de terminaison E1 et un point de terminaison E4 du routeur R4. Un troisième tunnel de communication est établi sur le réseau WAN2 entre un point de terminaison E2 du routeur R1 et un point de terminaison E5 du routeur R4. Un quatrième tunnel de communication est établi sur le réseau WAN1 entre un point de terminaison E6 du routeur R2 et le point de terminaison E4 du routeur R4. Un cinquième tunnel de communication est établi sur le réseau WAN2 entre un point de terminaison E7 du routeur R2 et un point de terminaison E8 du routeur R5.

Le système de communication est équipé de sondes réseau (« network probe » en anglais) 130. Les sondes réseau 130 sont agencées et configurées pour effectuer des mesures de débit de données entrant dans les tunnels de communication et de données sortant des tunnels de communication, c'est-à-dire au niveau des points de terminaison 120 des tunnels de communication, de manière à pouvoir détecter des situations de congestion dans le ou les réseaux de communication 100. Les mesures de débit sont des mesures, sur une période de durée prédéfinie, de volumes de données encapsulées dans le protocole des tunnels de communication. Les sondes réseau 130 peuvent être incluses dans les routeurs 110 ou y être connectées, dès lors que lesdites sondes réseau 130 ont accès au plan de données des routeurs 110 afin de capter les paquets transmis dans les tunnels de communication et de pouvoir mettre en place un protocole de communication inter-sondes, qui permet aux sondes réseau 130 des points de terminaison 120 d'un même tunnel de communication de s'envoyer des informations relatives auxdites mesures afin d'effectuer des calculs de débit de données. Cela permet d'assurer que le protocole de communications inter-sondes emprunte le même chemin que les paquets du tunnel de communication supervisé par les sondes réseau 130 en question.

Une dite sonde réseau 130 est ainsi associée à chaque point de terminaison 120 des tunnels de communication à surveiller en termes de débit de données encapsulées. Dans un mode de réalisation particulier, une même sonde réseau 130 peut être associée à plusieurs points de terminaison 120 d'un même routeur 110, et ainsi participer à la surveillance de plusieurs tunnels de communication pour un même routeur sans que ces tunnels de communication n'aient de points de terminaison en commun. A noter aussi que des tunnels de communication peuvent exister dans le système de communication alors qu'aucune sonde réseau 130 n'est mise en place à leurs points de terminaison 120.

Chaque sonde réseau 130 peut implémenter une fonction de gestion de situation de congestion qui serait révélée par les mesures de débit de données effectuées par ladite sonde réseau 130 en collaboration avec une autre dite sonde réseau 130 qui est associée à l'autre point de terminaison d'un dit tunnel de communication considéré. Ladite sonde réseau 130 est alors agencée et configurée pour modifier des profils de transmission de données dans le ou les réseaux de communication 100 de sorte à prendre en compte, préférentiellement améliorer, les situations de congestion qui seraient révélées par lesdites mesures de débit effectuées. Dans un mode de réalisation particulier, chaque sonde réseau 130 instruit une fonction d'admission de services du routeur auquel ladite sonde réseau 130 est associée, pour adapter les transmissions via chaque tunnel de communication ayant un point de terminaison 120 associé à ladite sonde réseau 130.

En variante, tel qu'illustré sur la Fig. 1B, les sondes réseau 130 sont en communication avec un orchestrateur 150. Les sondes réseau 130 sont alors agencées et configurées pour remonter à l'orchestrateur 150 des informations relatives aux mesures de débit effectuées. L'orchestrateur 150 est alors agencé et configuré pour modifier des profils de transmission de données dans le ou les réseaux de communication 100 de sorte à prendre en compte, préférentiellement améliorer, les situations de congestion qui seraient révélées par les mesures de débit effectuées par les sondes réseau 130. Ainsi, l'invention est particulièrement adaptée aux infrastructures de type SD-WAN (« Software-Defined Wide Area Network » en anglais). Dans un mode de réalisation particulier, l'orchestrateur 150 définit et impose (« enforce » en anglais) une politique d'admission de services dans le ou les réseaux de communication 100 qui tient compte des capacités effectives de communication dans ledit ou lesdits réseaux de communication 100 et qui prend donc en compte les situations de congestion révélées par les sondes réseau 130.

Chaque sonde réseau 130 a une adresse, pour communiquer dans le ou les réseaux de communication 100, qui est prédéfinie par rapport à l'adresse du point de terminaison 120 de tunnel de communication à laquelle ladite sonde réseau 130 est associée. Cela permet de mettre automatiquement en communication les sondes réseau 130 concernées lorsqu'un nouveau tunnel de communication est détecté (e.g., établi).

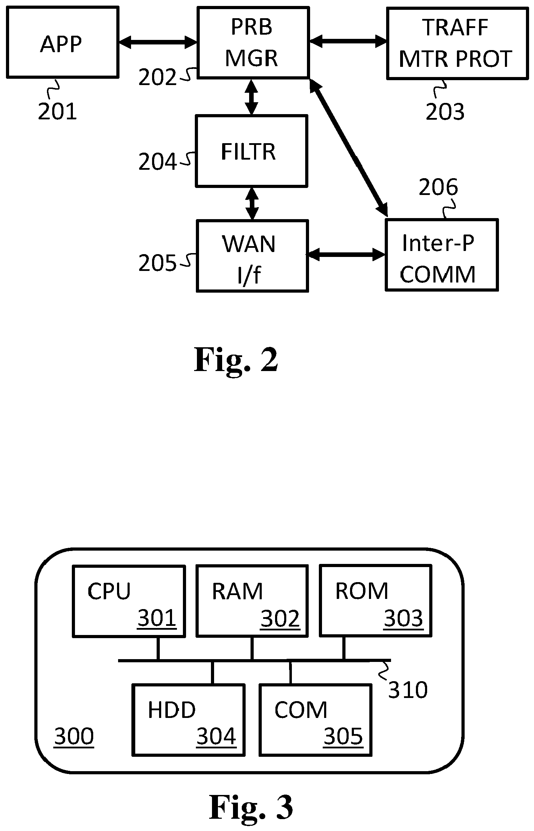

La Fig. 2 illustre schématiquement une architecture modulaire implémentée par les sondes réseau 130.

Chaque sonde réseau 130 inclut alors un module d'interface 205, par exemple un module d'interface WAN, permettant d'émettre et de recevoir des paquets de données sur le ou les réseaux de communication 100.

Chaque sonde réseau 130 inclut en outre un module de filtrage 204 permettant de récupérer, via le module d'interface 205, les paquets de données relatifs à des tunnels de communication. Typiquement, le module de filtrage 204 permet d'obtenir une copie de tout paquet de données de type GRE ou IPSec.

Chaque sonde réseau 130 inclut en outre un module de communication inter-sondes 206, permettant ainsi à ladite sonde réseau 130 de communiquer avec une autre dite sonde réseau 130 dans le cadre de la supervision d'un dit tunnel de communication. Un port UDP (« User Datagram Protocol » en anglais) dédié est préférentiellement utilisé pour ce faire. En complément, chaque sonde réseau 130 inclut en outre un module de gestion de protocole inter-sondes 203 assurant l'échange des informations de mesures de débit de données pour superviser ledit tunnel de communication.

Chaque sonde réseau 130 inclut en outre un module applicatif 201 en charge de collecter des informations relatives au débit de données de chaque tunnel de communication surveillé par ladite sonde réseau 130. Le module applicatif 201 peut ainsi être en charge d'instruire le routeur local pour modifier des profils de transmission de données dans le ou les réseaux de communication 100 de sorte à prendre en compte, préférentiellement améliorer (e.g,, gestion d'admission de services), les situations de congestion qui seraient révélées par les mesures de débit effectuées. En variante, le module applicatif 201 est en charge de remonter à l'orchestrateur 150 des informations relatives aux mesures de débit effectuées pour permettre à l'orchestrateur 150 de configurer tel ou tel routeur 110 afin de modifier des profils de transmission de données dans le ou les réseaux de communication 100 de sorte à prendre en compte, préférentiellement améliorer (e.g,, gestion d'admission de services), les situations de congestion qui seraient révélées par les mesures de débit effectuées.

Chaque sonde réseau 130 inclut en outre un module gestionnaire de sonde 202 configuré et agencé pour stocker des métriques liées aux mesures de débit de données effectuées par ladite sonde réseau 130, coordonner la mise en place et le déroulement des communications inter-sondes pour un tunnel de communication donné, et consolider les métriques stockées afin d'alimenter le module applicatif 201 en informations de surveillance de tunnel de communication.

D'autres architectures modulaires peuvent être implémentées pour implémenter les étapes et comportement décrits ici sans départir des principes de l'invention, notamment en répartissant autrement les fonctions réalisées par les modules exposés ci-dessus.

La Fig. 3 illustre schématiquement un exemple d'architecture matérielle des sondes réseau 130, et permettant notamment d'implémenter l'architecture modulaire de la Fig. 2. Considérons à titre illustratif que la Fig. 3 représente la sonde réseau P1.

La sonde réseau P1 comprend alors, reliés par un bus de communication 310 : un processeur ou CPU (pour « Central Processing Unit » en anglais) 301, ou une grappe de tels processeurs, comme par exemple des GPU (« Graphics Processing Units » en anglais) ; une mémoire vive RAM (pour « Random Access Memory » en anglais) 302 ; une mémoire morte ROM (pour « Read Only Memory » en anglais) 303, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 304, ou un lecteur de support de stockage, tel qu'un lecteur de cartes SD (pour « Secure Digital » en anglais) ; un ensemble d'interfaces d'entrées et/ou sorties, telles que des interfaces de communication 305, permettant notamment à la sonde réseau P1 de capter des paquets à destination du routeur 110 auquel la sonde réseau P1 est associée, ou en transit via le routeur 110 auquel la sonde réseau P1 est associée, ainsi que de communiquer avec d'autres sondes réseau 130 du système de communication.

Le processeur 301 est capable d'exécuter des instructions chargées dans la RAM 302 à partir de la ROM 303, d'une mémoire externe (non représentée), d'un support de stockage, tel qu'une carte SD ou le disque dur HDD, ou d'un réseau de communication. Lorsque la sonde réseau P1 est mise sous tension, le processeur 301 est capable de lire de la RAM 302 des instructions et de les exécuter. Ces instructions forment un programme d'ordinateur causant l'implémentation, par le processeur 301, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

Il en découle que l'architecture modulaire de la Fig. 2 peut être implémentée sous forme logicielle par exécution d'un ensemble d'instructions par une machine programmable, ou être implémenté sous forme matérielle par une machine ou un composant dédié ou un ensemble de composants dédiés.

D'une manière générale, chaque sonde réseau 130 comprend de la circuiterie électronique agencée et configurée pour implémenter les étapes, comportements et algorithmes décrits ici, et notamment l'architecture modulaire de la Fig. 2.

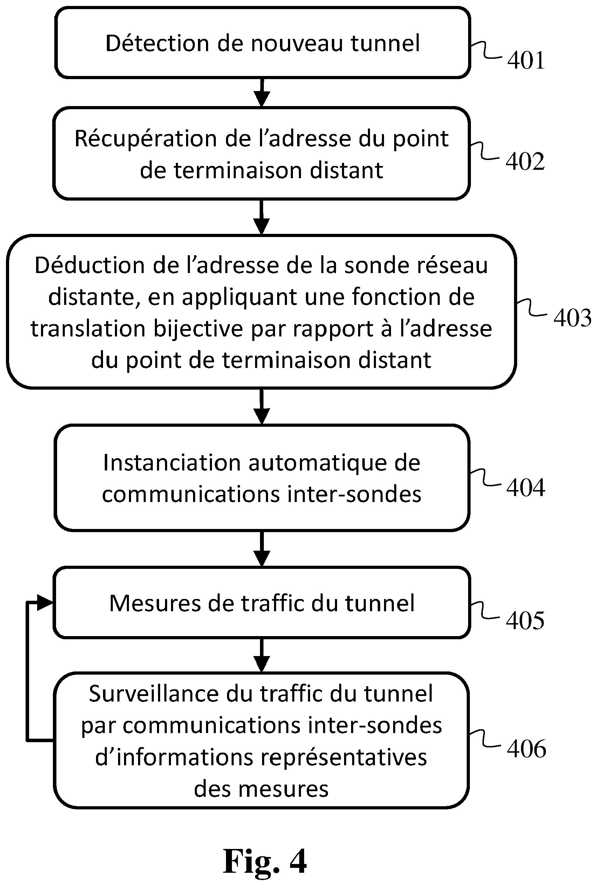

La Fig. 4 illustre schématiquement un organigramme de mise en communication automatique des sondes réseau 130, et de mise en place d'une surveillance de trafic dans au moins un tunnel du système de communication. L'organigramme de la Fig. 4 est implémenté par chaque sonde réseau 130.

Dans une étape 401, la sonde réseau 130 détecte un nouveau tunnel de communication dont un point de terminaison est le point de terminaison 120 auquel est associée ladite sonde réseau 130. La détection d'un nouveau tunnel de communication est préférentiellement réalisée par détection de la réception ou de la transmission d'un paquet d'encapsulation de tunnel, par exemple de type GRE ou IPSec, correspondant à un tunnel de communication qui n'avait pas été précédemment détecté. Un nouveau tunnel de communication est ainsi détecté lorsque l'adresse source et l'adresse destination forment un couple de points de terminaison 120 encore inconnu de ladite sonde réseau 130 (sachant que ladite sonde réseau 130 est associée à un desdits points de terminaison 120).

Dans une étape 402, la sonde réseau 130 récupère l'adresse du point de terminaison distant, c'est-à-dire celui qui est de l'autre côté du tunnel de communication qui a été nouvellement détecté à l'étape 401. Si l'adresse destination correspond au point de terminaison 120 auquel est associée ladite sonde réseau 130, alors l'adresse du point de terminaison distant est l'adresse source. A l'inverse, si l'adresse source correspond au point de terminaison 120 auquel est associée ladite sonde réseau 130, alors l'adresse du point de terminaison distant est l'adresse destination. A noter qu'aucune inspection profonde de paquet DPI (« Deep Packet Inspection » en anglais) n'est requise.

Dans une étape 403, la sonde réseau 130 déduit l'adresse de la sonde réseau distante, avec laquelle ladite sonde réseau 130 doit collaborer pour surveiller le tunnel de communication en question, en appliquant une fonction de translation bijective par rapport à l'adresse du point de terminaison distant telle que récupérée à l'étape 402.

Dans un mode de réalisation particulier, l'adresse de la sonde réseau distante est obtenue en appliquant une règle de conversion (« mapping » en anglais) prédéfinie.

Dans un mode de réalisation particulier, l'adresse de la sonde réseau distante est obtenue en appliquant un décalage (« offset » en anglais) prédéfini (positif ou négatif) par rapport à l'adresse du point de terminaison distant.

Dans un mode de réalisation particulier, l'adresse de la sonde réseau distante est obtenue en ajoutant un *(i.e.,* une unité) à l'adresse du point de terminaison distant.

Dans une étape 404, la sonde réseau 130 effectue une instanciation automatique de communications inter-sonde entre ladite sonde réseau 130, qui supervise donc un premier point de terminaison 120 du tunnel de communication en question, et la sonde réseau distante, qui supervise le second point de terminaison 120 de ce tunnel de communication. L'instanciation automatique des communications inter-sondes est réalisable grâce à la prédéfinition des adresses des sondes réseau 130 par rapport aux adresses de leurs points de terminaison respectifs. Préférentiellement, chaque sonde réseau 130 ouvre un connecteur réseau (« socket » en anglais) avec l'adresse du point de terminaison 120 qui lui est associé, à laquelle la fonction de translation bijective est appliquée, et avec un port UDP dédié. Cela permet à chaque sonde réseau 130 de recevoir des messages UDP qui sont adressés, par tout autre sonde réseau 130, à destination de cette adresse et de ce port UDP dédié.

Ainsi, lorsqu'un tunnel de communication est mis en place entre deux points de terminaison 120, chacune des sondes réseau 130 surveillant une des extrémités dudit tunnel de communication détecte le transit d'un paquet dudit tunnel de communication. Grâce à la prédéfinition des adresses des sondes réseau 130 par rapport à celles des points de terminaison 120 auxquels lesdites sondes réseau 130 sont associées, la mise en communication desdites sondes réseau 130 peut s'établir automatiquement de sorte à surveiller conjointement le trafic (sans inspection profonde de paquet).

Dans une étape 405, la sonde réseau 130 effectue des mesures de débit de données pour le tunnel de communication en question. Les mesures de débit de données sont réalisées par comptage de volume de données transmises et/ou reçues sur des cycles périodiques. Les mesures de débit de données peuvent être réalisées par type de trafic (ou types de services) dans le tunnel de communication, par exemple en s'appuyant sur une information de type de trafic (ou de service) incluse dans les paquets d'encapsulation du tunnel de communication. Dans un mode de réalisation particulier, les mesures de débit de données sont réalisées par valeurs de champ DSCP (« Differentiated Services Code Point » en anglais) des paquets d'encapsulation du tunnel de communication.

Dans une étape 406, la sonde réseau 130 effectue une surveillance du trafic de données dans le tunnel de communication en question, à partir des mesures effectuées à l'étape 405. Le principe de la surveillance du tunnel de communication consiste à comparer les mesures de débit de données entrant dans le tunnel de communication (au niveau d'un point de terminaison) et celles du débit de données sortant du tunnel de communication (au niveau de l'autre point de terminaison). Une information représentative des mesures de débit effectuées par une sonde réseau est transmise à l'autre sonde réseau de l'autre côté du tunnel de communication (potentiellement dans les deux sens), et une différence entre ces débits au-delà d'une marge prédéterminée met en évidence une congestion. L'information peut alors être utilisée par exemple par un mécanisme d'admission des services de sorte à adapter en conséquence une politique d'admission de services pour gagner en cohérence par rapport aux capacités de transmission effectives du ou des réseaux de communication 100 (e.g., prise en compte de la variabilité de bande passante d'une liaison satellite). En l'absence d'ajustement de la politique d'admission de services, des pertes de paquets vont impacter les différents services, qui peuvent potentiellement cesser de fonctionner ou être fortement dégradés. Au contraire un ajustement de la politique d'admission de services va désigner un service (moins prioritaire) à interrompre, ou à dégrader, permettant aux autres services (plus prioritaires) de continuer à fonctionner correctement.

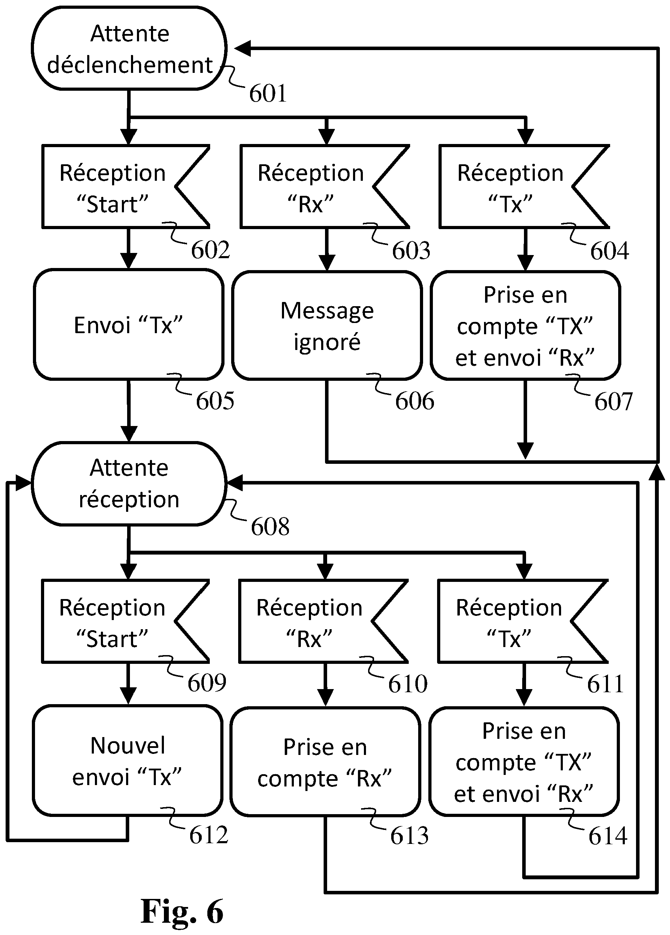

Une boucle est alors réalisée entre les étapes 406 et 405, de sorte à surveiller le trafic dans le tunnel de communication en question, par cycles périodiques. Un automate de transmission des informations représentatives des mesures de débit est présenté ci-après en relation avec la Fig. 6, dans un mode de réalisation particulier.

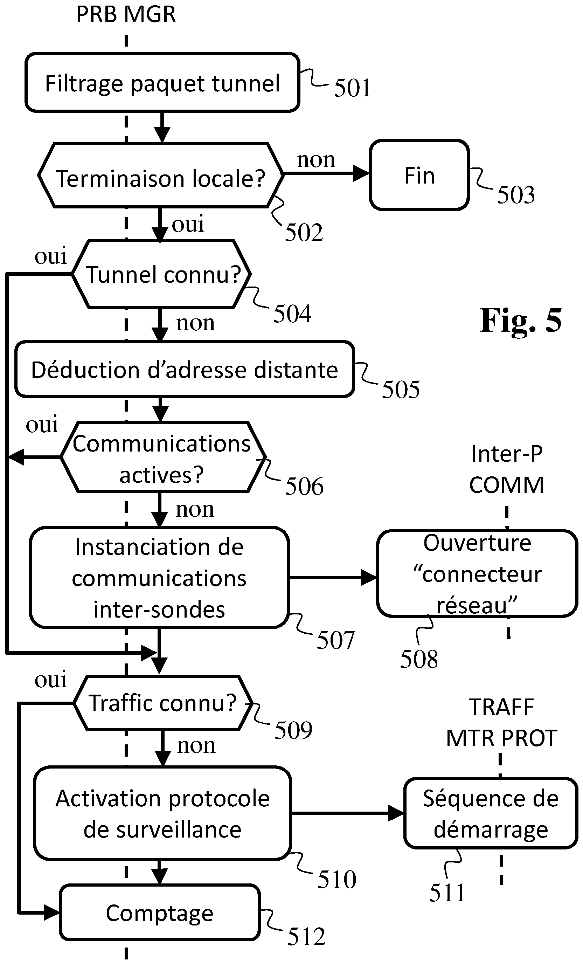

La Fig. 5 illustre schématiquement un organigramme de mise en communication automatique des sondes réseau 130, dans un mode de réalisation particulier. L'organigramme de la Fig. 4 est implémenté par chaque sonde réseau 130. La Fig. 5 est décrite ici en référence à l'architecture modulaire présentée sur la Fig. 2.

Dans une étape 501, le module gestionnaire de sonde 202 obtient un paquet de données du tunnel de communication, résultant du filtrage réalisé par le module de filtrage 204 sur l'ensemble des paquets de données transitant (émission / réception) via le module d'interface 205.

Dans une étape 502, le module gestionnaire de sonde 202 détermine si le paquet de données filtré est originaire d'un point de terminaison local au routeur auquel est associée la sonde réseau 130 considérée, ou à destination d'un tel point de terminaison local audit routeur. Si tel est le cas, une étape 504 est effectuée ; sinon, dans une étape 503, il est mis fin à l'algorithme.

Dans l'étape 504, le module gestionnaire de sonde 202 détermine si le paquet de données filtré est issu d'un tunnel de communication déjà connu de la sonde réseau 130 en question. En d'autres termes, le module gestionnaire de sonde 202 détermine si l'adresse source et l'adresse destination du paquet filtré forment un couple de points de terminaison 120 identifiés en mémoire de la sonde réseau 130 en question. Si tel est le cas, une étape 509 est effectuée ; sinon, le module gestionnaire de sonde 202 instancie en mémoire (dans une base de données, par exemple) un descripteur pour le tunnel de communication, identifié par l'adresse source et l'adresse destination du paquet filtré, permettant de stocker ultérieurement des métriques relatives à des mesures de trafic de données dudit tunnel de communication. Et une étape 505 est effectuée.

Dans l'étape 505, le module gestionnaire de sonde 202 déduit l'adresse de la sonde réseau 130, qui est associée au point de terminaison de l'autre côté du tunnel de communication. Pour ce faire, le module gestionnaire de sonde 202 récupère, dans le paquet filtré (ou dans une succession de paquets ainsi filtrés), une adresse de ce point de terminaison de l'autre côté du tunnel de communication. Le module gestionnaire de sonde 202 en déduit une adresse de cette autre sonde réseau 130, en appliquant une fonction de translation bijective (par exemple un décalage prédéfini) par rapport à l'adresse de point de terminaison qui a été récupérée. Cette adresse déduite peut ensuite être utilisée pour transmettre des messages à ladite autre sonde réseau 130 dans le cadre du protocole de communication inter-sondes. Par exemple, par le biais de messages UDP adressés à cette adresse, avec un port UDP dédié. Il suffit que l'autre sonde réseau 130 ouvre un connecteur réseau (« socket » en anglais) correspondant pour que les messages en question soient reçus.

Dans une étape 506, le module gestionnaire de sonde 202 détermine si des communications sont déjà actives avec la sonde réseau 130 locale, ce qui signifie qu'un autre tunnel a déjà été établi avec le point de terminaison 120 local. Si tel est le cas, l'étape 509 est effectuée ; sinon, cela signifie que c'est le premier tunnel de communication géré localement pour le point de terminaison 120 en question, et le module gestionnaire de sonde 202 instancie, dans une étape 507, le module de communication inter-sondes 206, ce qui lui permet de communiquer avec d'autres sondes réseau 130 du système de communication. Et dans une étape 508, le module de communication inter-sondes 206 ouvre, sur instruction du module gestionnaire de sonde 202, un connecteur réseau (« socket » en anglais) avec sa propre adresse. Sa propre adresse est définie de la même manière que pour l'autre sonde réseau 130, c'est-à-dire en appliquant la fonction de translation bijective à l'adresse du point de terminaison associé. Cela permet de recevoir des messages qui vont être transmis par ladite autre sonde réseau 130 dans le cadre du protocole de communication inter-sondes. Comme déjà indiqué, un port UDP dédié peut être utilisé. Puis l'étape 509 est effectuée.

Dans l'étape 509, le module gestionnaire de sonde 202 détermine si le paquet filtré correspond à un type de trafic (ou de service) déjà surveillé, donc connu de la sonde réseau 130 en question, dans le tunnel de communication. Par exemple, l'identification du trafic (ou du service) concerné est réalisée par la valeur d'un champ DSCP du paquet filtré. Si tel est le cas, une étape 512 est effectuée ; sinon, une étape 510 est effectuée.

Dans l'étape 510, le module gestionnaire de sonde 202 active le protocole de surveillance pour le trafic en question. Un automate de transmission entre les sondes réseau concernées d'informations représentatives de mesures de débit effectuées pour le type de trafic en question dans le tunnel de communication en question est alors instancié par le module de gestion de protocole inter-sondes 203, sur instruction du module gestionnaire de sonde 202. Le module de gestion de protocole inter-sondes 203 initie ainsi une séquence de démarrage de l'automate. L'étape 512 est ensuite effectuée.

Dans l'étape 512, le module gestionnaire de sonde 202 effectue un comptage des données encapsulées dans le paquet filtré. Le module gestionnaire de sonde 202 met à jour (incrément), dans le descripteur en mémoire correspondant au service concerné pour le tunnel de communication concerné, le volume de données utiles contenues dans le paquet filtré qui ont été reçues ou transmises (selon le sens de communication considéré) via le point de terminaison 120 auquel est associée la sonde réseau 130 en question. Le module gestionnaire de sonde 202 met ainsi à jour les métriques liées aux mesures de débit de données effectuées par ladite sonde réseau 130. Il est alors mis fin à l'algorithme jusqu'à la réception d'un nouveau paquet filtré par le module de filtrage 204.

La Fig. 6 illustre schématiquement une machine d'états, ou automate, du protocole de communication inter-sondes, dans un mode de réalisation particulier. Le protocole de communication inter-sondes est préférentiellement géré par un automate associé à chaque type de service (e.g., chaque valeur de champ DSCP des paquets d'encapsulation) de chaque tunnel de communication, en collaboration avec le module gestionnaire de sonde 202 qui centralise les données mesurées par cycle périodique de mesures.

Les messages échangés dans le cadre du protocole de communication inter-sondes contiennent des informations représentatives de mesures de flux en émission (TX) ou réception (RX) via le tunnel de communication considéré et un type du message qui indique si les informations incluses concernent l'émission (TX) ou la réception (RX), ce qui peut permettre à la sonde réseau 130 distante d'adapter son rôle (amont ou aval). Les messages échangés peuvent inclure des informations complémentaires, comme le type de trafic concerné (e.g, valeur de champ DSCP), des numéros de séquence de messages, et/ou des informations d'acquittement. A chaque réception de message par le module gestionnaire de sonde 202, les métriques stockées par ledit module gestionnaire de sonde 202 sont mises à jour.

La séquence de démarrage susmentionnée place l'automate dans un état « Attente déclenchement » 601. Trois événements peuvent faire sortir l'automate de cet état :
- un événement « Start » 602, qui notifie l'automate d'une frontière de cycles périodiques (un cycle se termine et un autre cycle commence). Cet événement 602 déclenche une étape 605.
- un événement « Rx » 603, qui notifie d'une réception de message de type RX. Cet événement 603 déclenche une étape 606.
- un événement « Tx » 604, qui notifie d'une réception de message de type TX. Cet événement 604 déclenche une étape 607.

Dans l'étape 605, le module de gestion de protocole inter-sondes 203 demande au module gestionnaire de sonde 202 de construire, à partir des métriques stockées pour le tunnel de communication considéré et le type de service considéré, un message TX, et de transmettre le message TX construit à la sonde réseau 130 distante. L'automate se place alors dans un état « Attente Réception » 608.

Dans l'étape 606, le module de gestion de protocole inter-sondes 203 détecte avoir reçu un message RX non escompté (par exemple, un message RX en retard), et l'ignore. L'automate repasse alors dans l'état « Attente déclenchement » 601.

Dans l'étape 607, le module de gestion de protocole inter-sondes 203 détecte avoir reçu, par le biais du module gestionnaire de sonde 202, un message TX. Le module de gestion de protocole inter-sondes 203 informe le module gestionnaire de sonde 202 du contenu du message TX reçu, pour mise à jour des métriques correspondantes en mémoire. En outre, le module de gestion de protocole inter-sondes 203 demande au module gestionnaire de sonde 202 de construire, à partir des métriques stockées pour le tunnel de communication considéré et le type de service considéré, un message RX, et de transmettre le message RX construit à la sonde réseau 130 distante. L'automate repasse alors dans l'état « Attente déclenchement » 601.

Trois événements peuvent faire sortir l'automate de l'état « Attente Réception » 608 :
- un événement « Start » 609, qui notifie l'automate d'une frontière de cycles périodiques (un cycle se termine et un autre cycle commence). Cet événement 609 déclenche une étape 612.
- un événement « Rx » 610, qui notifie d'une réception de message de type RX. Cet événement 610 déclenche une étape 613.
- un événement « Tx » 611, qui notifie d'une réception de message de type TX. Cet événement 604 déclenche une étape 614.

Dans l'étape 609, le module de gestion de protocole inter-sondes 203 demande au module gestionnaire de sonde 202 de construire, à partir des métriques stockées et mises à jour pour le tunnel de communication considéré et le type de service considéré, un nouveau message TX et de l'envoyer à la sonde réseau 130 distante. Ce cas de figure apparaît lorsque le module de gestion de protocole inter-sondes 203 n'a pas reçu, de la sonde réseau 130 distante, le message RX escompté en réponse au message TX transmis lors de la réception du dernier événement « Start ». L'automate repasse alors dans l'état « Attente Réception » 608.

Dans l'étape 610, le module de gestion de protocole inter-sondes 203 détecte avoir reçu, par le biais du module gestionnaire de sonde 202, un message RX. Le module de gestion de protocole inter-sondes 203 informe le module gestionnaire de sonde 202 du contenu du message TX reçu, pour mise à jour des métriques correspondantes en mémoire et notification au module applicatif 201. Le module gestionnaire de sonde 202 ou le module applicatif 201 peut ainsi comparer les mesures de débit d'un côté et de l'autre du tunnel de communication considéré pour le type de service considéré. Le module applicatif 201 peut ainsi instruire le routeur 110 auquel la sonde réseau 130 en question est associée, pour adapter en conséquence l'admission de services en entrée du tunnel de communication, ou en informer l'orchestrateur 150. L'automate passe alors dans l'état « Attente déclenchement » 601.

Dans l'étape 611, le module de gestion de protocole inter-sondes 203 détecte avoir reçu, par le biais du module gestionnaire de sonde 202, un message TX. Le module de gestion de protocole inter-sondes 203 informe le module gestionnaire de sonde 202 du contenu du message TX reçu, pour mise à jour des métriques correspondantes en mémoire. En outre, le module de gestion de protocole inter-sondes 203 demande au module gestionnaire de sonde 202 de construire, à partir des métriques stockées pour le tunnel de communication considéré et le type de service considéré, un message RX, et de transmettre le message RX construit à la sonde réseau 130 distante. L'automate repasse alors dans l'état « Attente Réception » 608.

L'automate présenté ci-dessus donne un rôle de maître au module de gestion de protocole inter-sondes 203 de la sonde réseau 130 amont pour chaque flux de données transitant par le tunnel de communication, c'est-à-dire la sonde réseau 130 associé au point de terminaison par lequel le trafic de données surveillé entre dans le tunnel de communication. Plus particulièrement, en utilisant des paquets UDP pour la transmission des messages TX, la sonde réseau 130 amont cadence la génération des messages RX au niveau de la sonde réseau 130 aval, ce qui facilite la gestion de l'asynchronisme entre les sondes réseau 130 en question.

Un automate équivalent peut toutefois aisément être dérivé de la description ci-dessus pour donner ce rôle de maître à la sonde réseau 130 aval, c'est-à-dire la sonde réseau 130 associée au point de terminaison par lequel le trafic de données surveillé sort du tunnel de communication.

## Revendications

1. Procédé implémenté par une sonde réseau (130) dans un système de communication comportant une pluralité de routeurs (110), la sonde réseau (130) étant associée à un premier routeur (110) de ladite pluralité de routeurs (110) et à un premier point de terminaison (120) du premier routeur (110), le procédé étant effectué par la sonde réseau (130), appelée ici première sonde réseau, et comportant les étapes suivantes :
- détecter, par filtrage de paquets issus ou à destination du premier routeur (110), un tunnel de communication entre le premier point de terminaison (120) et un deuxième point de terminaison (120) d'un deuxième routeur (110) de ladite pluralité de routeurs (110) ;
- récupérer, dans au moins un paquet filtré, une adresse du deuxième point de terminaison (120) ;
- déduire une adresse d'une deuxième sonde réseau (130) associée au deuxième point de terminaison (120) et au deuxième routeur (110), en appliquant une fonction de translation bijective par rapport à l'adresse du deuxième point de terminaison (120) qui a été récupérée ;
- mise en place de communications inter-sondes entre la première sonde réseau (130) et la deuxième sonde réseau (130), en utilisant l'adresse de la deuxième sonde réseau (130) qui a été déduite ; et
- effectuer une surveillance de trafic de données dans le tunnel de communication, de manière conjointe par la première sonde réseau (130) et la deuxième sonde réseau (130), par mesures de trafic de données émis et reçu au niveau respectivement du premier point de terminaison (120) et du deuxième point de terminaison (120).

2. Procédé selon la revendication 1, dans lequel la fonction de translation bijective consiste à appliquer un décalage prédéfini par rapport à l'adresse du deuxième point de terminaison (120) qui a été récupérée

3. Procédé selon la revendication 2, dans lequel l'adresse de la deuxième sonde réseau (130) est déduite de l'adresse du deuxième point de terminaison (120) qui a été récupérée, en ajoutant un à l'adresse du deuxième point de terminaison (120) qui a été récupérée.

4. Procédé selon l'une quelconque des revendications 1 à 3, dans lequel la surveillance de trafic de données dans le tunnel de communication, de manière conjointe par la première sonde réseau (130) et la deuxième sonde réseau (130), est effectuée par type de services.

5. Procédé selon l'une quelconque des revendications 1 à 4, dans lequel le filtrage de paquets issus ou à destination du premier routeur (110) récupère des paquets de données de type GRE ou IPSec.

6. Procédé selon l'une quelconque des revendications 1 à 5, dans lequel la première sonde réseau (130) reçoit de la deuxième sonde réseau (130) des informations représentatives de données reçues pour ledit trafic, les compare avec des informations représentatives de données transmises par la première sonde réseau (130) pour ledit trafic, détermine si une différence entre données reçues et transmises est supérieure à un seuil prédéfini et, auquel cas, détermine l'existence d'une situation de congestion.

7. Procédé selon l'une quelconque des revendications 1 à 6, dans lequel des informations représentatives de la surveillance de trafic sont transmises à un orchestrateur (150) du système de communication afin d'adapter des admissions de services.

8. Produit programme d'ordinateur comportant des instructions pour implémenter le procédé selon l'une quelconque des revendications 1 à 7, lorsque lesdites instructions sont exécutées par un processeur.

9. Support de stockage d'informations stockant un programme d'ordinateur comportant des instructions pour implémenter le procédé selon l'une quelconque des revendications 1 à 7, lorsque lesdites instructions sont lues depuis le support de stockage d'informations et exécutées par un processeur.

10. Dispositif configuré pour implémenter une sonde réseau (130), appelée ici première sonde réseau, d'un système de communication comportant une pluralité de routeurs (110), la sonde réseau (130) étant associée à un premier routeur (110) de ladite pluralité de routeurs (110) et à un premier point de terminaison (120) du premier routeur (110), le dispositif comportant de la circuiterie électronique configurée pour :
- détecter, par filtrage de paquets issus ou à destination du premier routeur (110), un tunnel de communication entre le premier point de terminaison (120) et un deuxième point de terminaison (120) d'un deuxième routeur (110) de ladite pluralité de routeurs (110) ;
- récupérer, dans au moins un paquet filtré, une adresse du deuxième point de terminaison (120) ;
- déduire une adresse d'une deuxième sonde réseau (130) associée au deuxième point de terminaison (120) et au deuxième routeur (110), en appliquant une fonction de translation bijective par rapport à l'adresse du deuxième point de terminaison (120) qui a été récupérée ;
- mise en place de communications inter-sondes entre la première sonde réseau (130) et la deuxième sonde réseau (130), en utilisant l'adresse de la deuxième sonde réseau (130) qui a été déduite ; et
- effectuer une surveillance de trafic de données dans le tunnel de communication, de manière conjointe par la première sonde réseau (130) et la deuxième sonde réseau (130), par mesures de trafic de données émis et reçu au niveau respectivement du premier point de terminaison (120) et du deuxième point de terminaison (120).

11. Système de communication comportant une pluralité de routeurs (110) et comportant au moins un tunnel de communication entre des points de terminaison (120) desdits routeurs (110), dans lequel une pluralité de dispositifs selon la revendication 10 est configurée pour implémenter des sondes réseau (130), afin d'effectuer une surveillance de trafic de données dans le ou les tunnels de communication de manière conjointe par lesdites sondes réseau (130).
